# EUROPÄISCHE PATENTSCHRIFT

(11) **EP 1 693 149 B1**
(45) Veröffentlichungstag und Bekanntmachung des Hinweises auf die Patenterteilung: **09.07.2008**
(21) Anmeldenummer: 06002864.4
(22) Anmeldetag: 13.02.2006
(51) Int. Cl.: B23Q 37/00, B23Q 1/01, B23Q 7/14

(54) **Bearbeitungsvorrichtung mit einem eine Werkstückaufnahme und ein Bearbeitungswerkzeug aufweisenden Wechselmodul**
Working device with a change module comprising a working tool and a work holder
Dispositif d'usinage avec un module échangeable comprenant un outil de travail et un porte-pièces

(30) Priorität: 22.02.2005 DE 102005009096
(43) Veröffentlichungstag der Anmeldung: 23.08.2006
(73) Patentinhaber: Maschinenfabrik Spaichingen GmbH, 78549 Spaichingen (DE)
(72) Erfinder: Braun, Hans-Dieter, 78665 Frittlingen (DE)
(74) Vertreter: Manitz, Finsterwald & Partner GbR

(56) Entgegenhaltungen:
- EP-A- 0 496 995
- WO-A-99/43462
- DE-A1- 10 064 523
- DE-A1- 10 313 792
- DE-A1- 19 741 671
- DE-A1- 19 811 973
- FR-A- 2 841 662

## Beschreibung

Die Erfindung betrifft eine Vorrichtung nach dem Oberbegriff von Anspruch 1 (siehe, z.B., FR-2 841 662-A).

Vorrichtungen der hier interessierenden Art dienen zur Bearbeitung von Kunststoff enthaltenden Werkstücken, insbesondere solchen, die ganz oder teilweise aus thermoplastischen Kunststoffen bestehen, durch Schweißen, Stanzen, Schneiden und/oder Kleben. Die Bearbeitung der Werkstücke erfolgt bei Anwendung derartiger Vorrichtungen meisten dadurch , daß die Werkstücke durch Erwärmung plastifiziert werden. Die Plastifizierung kann dabei durch Ultraschall (z. B. DE 100 46 451 A1), durch Anwendung von Heißluft (z. B. DE 100 38 158 B4) oder durch Kontakt mit einem Heizelement bewirkt werden. Als Bearbeitungswerkzeuge kommen z. B. Sonotroden, Düsen, die erwärmte Gasströmungen abgeben, elektrische Heizelemente od. dgl. in Betracht, wobei alle diese Werkzeuge vorzugsweise an Vorschubeinheiten montiert und dadurch in Richtung der Werkstücke vor- und zurückbewegbar sind, um Bearbeitungsvorgämge einzuleiten bzw. zu beenden.

Bearbeitungsvorrichtungen dieser Art bestehen aus komplexen Anlagen, die in vielfältiger Weise z. B. in der Automobilindustrie und dort insbesondere zur Herstellung von Stoßfängern, Tür- und Kofferraumverkleidungen, Instrnmententafeln, Konsolen od. dgl. aus Polyprophylen und anderen thermoplastischen Kunststoffen eingesetzt werden.

Ein besonderes Problem stellt die Umrüstung derartiger Bearbeitungsvorrichtungen beim Wechsel der Werkstücke dar, da hierzu sowohl die Werkstück-Aufnahmen als auch die verwendeten Werkzeuge bzw. deren Positionierungen verändert werden müssen. Es sind daher bereits Vorrichtungen der eingangs bezeichneten Gattung, insbesondere sogenannte Kassettenmaschinen bekannt, die mit auswechselbaren, als Kassetten oder Wechselmodule bezeichneten Einrichtungen versehen sind. Diese enthalten in einer an eine vorgewählte Bearbeitungsaufgabe angepaßten Weise die benötigten Aufnahmen und Werkzeuge und können vergleichsweise schnell in die jeweilige Bearbeitungsvorrichtung eingesetzt bzw. bei Bedarf gegen eine andere ausgetauscht werden. Vorteilhaft ist dabei, daß die nachfolgend durchweg als Wechselmodule bezeichneten Einrichtungen weitgehend außerhalb der Bearbeitungsvorrichtung zusarnmengestellt und vormontiert werden können, so daß nur kurze Stillstandzeiten für die Bearbeitungsvorrichtung erforderlich sind. Vorteilhaft ist ferner, dass diese Vorrichtungen eine Bearbeitungsstation und eine davon entfernte Einlege- und Entnahmestation aufweisen, in welcher die Werkstücke ohne Gefahr für die Bedienungsperson in die Aufnahmen eingelegt bzw. aus dieser entnommen werden. Die Aufnahmen können zu diesem Zweck zwischen der Einlege- und Entnahmestation und der Bearbeitungsstation automatisch hin- und hergefahren werden. Allerdings zeichnen sich die bisher bekannten Bearbeitungsvorrichtungen der eingangs bezeichneten Gattung durch zwei als nachteilig empfundene Merkmale aus.

Ein Merkmal besteht darin, daß die Wechselmodule mittels eines Hilfsmittels in Form eines Krans, eines Werkstattwagens od. dgl. an die Bearbeitungsvorrichtung herangebracht und dann, gegebenenfalls unter zusätzlicher Verwendung einer um 180° drehbaren Wechseleinrichtung, in die Bearbeitungsmaschinc eingeführt werden müssen. Die Anwendung eines derartigen Hilfsmittels ist mit umständlichen Manipulationen beim Aufladen, Fixieren, Abladen od. dgl. verbunden.

Ein anderes, ebenfalls nicht unbeachtliches Merkmal besteht darin, daß die Wechselmodule aus zwei voneinander trennbaren Elementen zusammengesetzt sind. Eines dieser Elemente, das meistens den Boden des Wechselmoduls bildet und die Werkstück-Aufnahme trägt, wird auf einem zwischen der Bearbeitungsstation und der Einlege- und Entnahmestation hin und her schiebbaren Schiebetisch der Vorrichtung montiert. Dagegen wird das andere, die Werkzeuge, deren Vorsehubeinheiten und andere Bauteile tragende und den restlichen Teil des Wechselmoduls bildende Element an einer sogenannten Brücke der Vorrichtung befestigt, mittels derer es dann senkrecht zur Aufnahme hin und her bewegt wird, um zwischen dieser und den Werkstücken einen zum Einlegen der Werkstücke geeigneten Raum zu schaffen, insbesondere wenn es sich um bauchige oder stark gekrümmte Werkstücke handelt. Aufgrund dieser Konstruktion ist einerseits erforderlich, im Bedarfsfall außer den Werkzeugen auch einen größeren, z. B. bis zu 500 kg schweren Gestellabschnitt des Wechselmoduls zu bewegen, was entsprechend ausgelegte Gestellteile und Antriebe erfordert. Andererseits müssen die beiden Elemente nach ihrer Überführung in die Bearbeitungsstation genau positioniert und in eine vorgegebene Relativstellung zueinander gebracht werden, wozu zahlreiche Positionier- und Arretiermittel benötigt werden. Dies erfordert Maßnahmen, die die Wechselzeiten insgesamt beträchtlich vergrößern.

Daneben sind zahlreiche Vorrichtungen der eingangs bezeichneten Gattung bekannt, bei denen einer Grundbearbeitungseinheit modulartig mehrere zusätzliche Bearbeitungseinheiten oder Zuführungseinheiten für zusätzliche Bauteile zugordnet werden können, um an den Werkstücken nacheinander mehrere Bearbeitungsschritte durchzuführen oder die Werkstücke mit ausgewählten Bauteilen zu kombinieren. Dabei können die zusätzlichen Bearbeitungs- und Zuführungseinheiten auch fahrbar ausgebildet und mit Mitteln versehen sein, um sie positionsgenau mit einer Grundbearbeitungsstation zu koppeln (z. B. FR-2 841 662-A, EP-0 496 995-A, DE 103 13 792 A1, DE 197 41 671 A1, DE 199 10 028 A1 oder DE 34 13 255 A1). Bei keiner dieser Vorrichtungen wird jedoch das oben beschriebene Problem gelöst, einerseits die Werkstücke in einer von der Bearbeitungsstion entfernten Einlege/Entnahmc-Station z. B. manuell einzulegen und zu entnehmen, andererseits ohne umständliche Manipulationen und Einstellungen eine genaue Positionierung der Werkstücke in einer Bearbeitungsstation zu ertnöglichen, die in einem austauschbaren Wechselmodul angeordnet ist.

Ausgehend davon besteht die Aufgabe der vorliegenden Erfindung darin, die Vorrichtung der eingangs bezeichneten Gattung so auszubilden, daß für den Wechselvorgang keine zusätzlichen Hilfsmittel wie Kräne, Wagen od. dgl. benötigt werden, geringe Wechselzeiten und damit Stillstandzeiten der Bearbeitungsvorrichtung realisierbar sind und keine aufwendigen, umständliche Manipulationen erfordernden Positionier-, lustier- und Arretierungsmaßnahmen durchgeführt werden müssen.

Zur Lösung dieses Problems dient eine Vorrichtung mit dem Merkmalen des Anspruchs 1.

Die Erfindung sieht einerseits vor, den Wechselmodul als Ganzes fahrbar und so auszubilden, daß er manuell und ohne zusätzliches Hilfsmittel an das Grundgestell heran- und in dieses eingefahren werden kann. Andererseits ist der Wechselmodul so eingerichtet, daß er selbst und nicht das Grundgestell die relativen Lagen der Werkstücke und Werkzeuge zueinander beim Bearbeitungsvorgang vorgibt. Das gilt unabhängig davon, ob es zusätzlich möglich sein soll, die Bearbeitungswerkzeuge mit einem vergleichsweise großen Hub relativ zu den Werkstücken zu bewegen. Daher kann der Wechselmodul einteilig ausgebildet und bis auf einen zwischen dem Wechselmodul und einer Einlege- und Entnahmestation für die Werkstücke verschiebbaren Schiebetisch fest in einem Grundgestell der Vorrichtung montiert werden. Nach der Positionierung und Verriegelung des Wechselmoduls in diesem Grundgestell sind keine weiteren Maßnahmen mehr erforderlich, um z. B. die Werkzeuge genau auf die Werkstücke auszurichten, so daß jeder Wechselvorgang einfach und schnell durchgeführt werden kann. Außerdem kann die Vorrichtung insgesamt einfacher und damit auch kostengünstiger als bisher ausgebildet werden.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 eine schematische und perspektivische Vorderansicht einer erfindungsgemäßen Bearbeitungsvorrichtung ohne eingesetzten Wechselmodul;
Fig. 2 eine schematische und perspektivische Hinteransicht der Bearbeitungsvorrichtung nach Fig 1;
Fig. 3 eine schematische und perspektivische Vorderansicht eines erfindungsgemäßen Wechselmoduls der Bearbeitungsvorrichtung nach Fig. 1 und 2, jedoch in einem gegenüber Fig. 1 und 2 vergrößerten Maßstab; und
Fig. 4 und 5 den Fig. 1 und 2 entsprechende Ansichten der Bearbeitungsvorrichtung nach dem Einsetzen des Wechselmoduls nach Fig. 3.

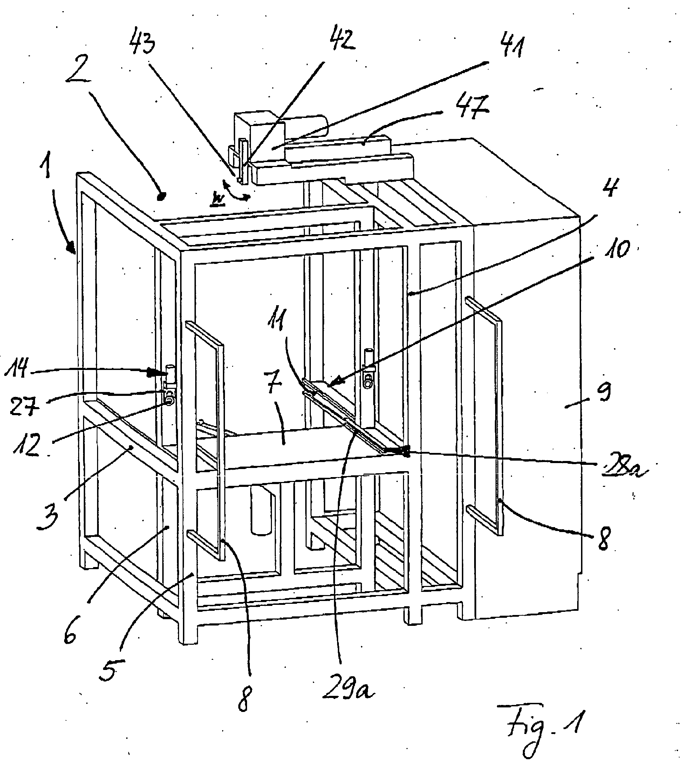

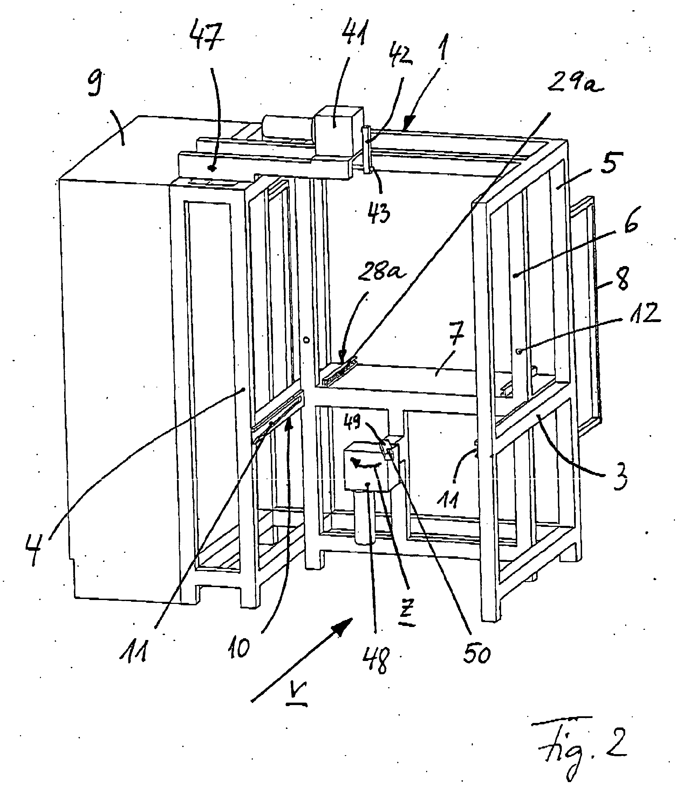

Nach Fig. 1 und 2 enthält eine erfindungsgemäße Bearbeitungsvorrichtung ein allgemein mit dem Bezugszeichen 1 bezeichnetes, auf dem Fußboden abgestütztes Grundgestell. Das Grundgestell 1 ist, von oben her betrachtet, im wesentlichen U-förmig ausgebildet, wodurch auf seiner Rückseite ein Freiraum 2 entsteht, der seitlich durch zwei mit Abstand angeordnete Rahmenteile 3 und 4 des Grundgestells 1 begrenzt ist. Nach vom ist der Freiraum 2 durch zwei quer zu den Rahmenteilen 3, 4 angeordnete, ebenfalls beabstandete Rahmenteile 5 und 6 des Grundgestells 1 begrenzt, die u.a. durch eine ebenfalls quer zu den Rahmenteilen 3, 4 und beim Gebrauch in der Regel horizontal angeordnete Grundplatte 7 oder sonstwie fest miteinander verbunden sind, so daß ein insgesamt biegesteifes Maschinengestell mit einem im wesentlichen U-förmigen Querschnitt entsteht.

Der vordere, die Grundplatte 7 aufweisende GesteIlabschnitt bildet eine Einlege- und Entnahmestation für zu bearbeitende Werkstücke und ist dazu mit den erforderlichen Öffnungen versehen. Zum Schutz der Bedienungsperson können an der Vorderseite der Bearbeitungsstation übliche Sicherheitsvorkehrungen getroffen werden, indem dort z. B. ein Mittel 8 zur Erzeugung eines Lichtvorhangs, ein Rolltor od. dgl. angeordnet wird. Außerdem grenzt an eines der seitlichen Rahmenteile, hier das Rahmenteil 4, vorzugsweise ein Schaltschrank 9. In diesem sind zweckmäßig alle Steuermittel und sonstigen Komponenten untergebracht, die für die Durchführung der mit dem speziellen Vorrichtungstyp durchführbaren Bearbeitungsaufgaben benötigt werden.

Auf der Rückseite des Grundgestells 1 sind gemäß Fig. 2 zwei erste Führungen 10 befestigt. Diese sind z. B. an den Innenseiten der Rahmenteile 3 und 4 befestigt und im Gebrauchszustand des Grundgestells 1 im wesentlichen horizontal angeordnet. Die Führungen 10 bestehen z. B. aus Schienen mit Führungsnuten 11, die zum Freiraum 2 hin offen sind. Schließlich sind in dem quer angeordneten, dem Freiraum 2 zugewandten Rahmenteil 6 zwei durchgehende Positionierungslöcher 12 vorgesehen, denen gemäß Fig. 1 auf der Vorderseite des Rahmenteils 6 angeordnete, erste Verriegelungsmittel 14 zugeordnet sind.

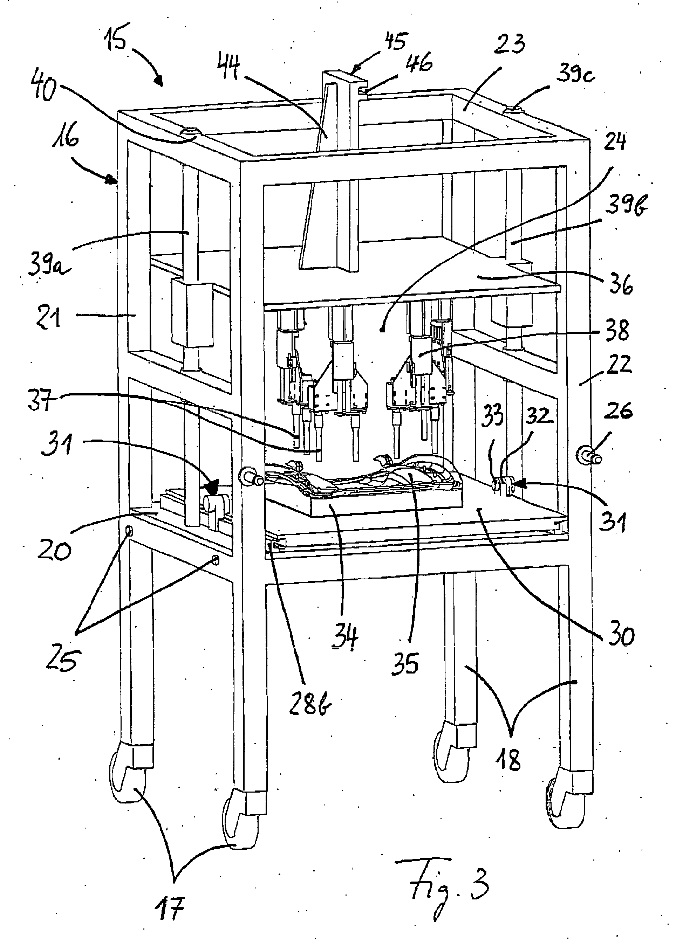

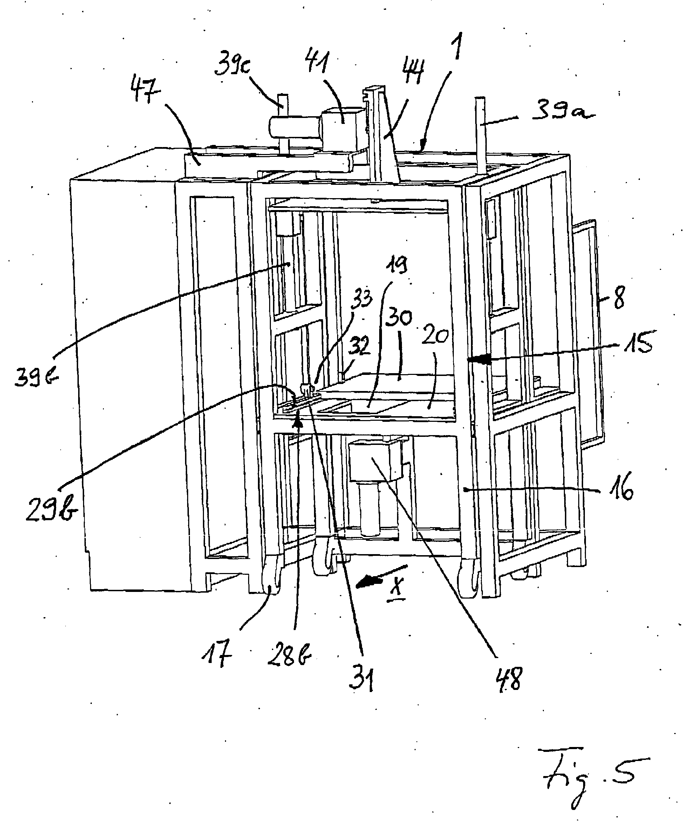

Fig. 3 zeigt einen Wechselmodul 15 der erfindungsgemäßen Bearbeitungsvorrichtung nach Fig. 1 und 2. Dieser enthält ein Gestell 16, das auf mit Laufrädern 17 versehenen Beinen 18 abgestützt und damit als Ganzes fahrbar auf dem Fußboden abgestellt ist. Die Außenabmessungen des Wechselmoduls 15 sind so gewählt, daß er auch als Ganzes in den Freiraum 2 der Bearbeitungsvorrichtung hineingefahren bzw. aus diesem herausgefahren werden kann, wie z. B. Fig. 5 zeigt. Das Gestell 16 entbiält ein rahmenförmiges oder auch ein mit einer Aussparung 19 versehenes, plattenförmbges Bodenteil 20, zwei seitliche Rahmenteile 21 und 22 und ein rahmenförmiges Deckenteil 23, die zu einer festen, biegesteifen Baueinheit miteinander verbunden sind und einen Bearbeitungsraum 24 (Fig. 3) begrenzen. Die Aussparung 19 reicht dabei bis an die Vorderseite des Bodenteils 20.

An den beiden seitlichen Rahmenteilen 21 und 22 des Wechselmoduls 15 sind erste, nach außen ragende und den ersten Führungen 10 (Fig. 2) zugeordnete Führungselemente 25 angebracht, die z. B. aus in die Führungsnuten 11 passenden, drehbar an den Rahmenteilen 21, 22 gelagerten Rollen bestehen. Dabei ist die Anordnung so getroffen, daß die Führungselemente 25, wenn der Wechselmodul 15 in den Freiraum 2 eingefahren wird, in die Führungsnuten 11 eintreten. Dadurch wird der Wechselmodul 15 automatisch in die richtige Position relativ zum Grundgestell 1 gebracht.

Nach einem besonders bevorzugten Ausführungsbeispiel der Erfindung sind die ersten Führungen 10 bzw. untere Begrenzungswände der Führungsnuten 11, wie in Fig. 2 angedeutet ist, etwas schräg angeordnet, und zwar von hinten nach vom leicht ansteigend. Der schräge Anstieg ist dabei so gewählt, daß der Wechselmodul 15 beim Einfahren in den Freiraum 2 in Richtung eines Pfeils v (Fig. 2) geringfügig angehoben wird, d. h. die Laufräder 17 z. B. um einige Millimeter vom Fußboden abgehoben werden. Dadurch wird sichergestellt, daß die relative Höhenlage des Wechselmoduls 15 im Freiraum 2 nicht durch Unebenheiten des Fußbodens od. dgl. beeinträchtigt werden kann.

Um auch eine definierte Lage des Wechselmoduls 15 in Richtung des Pfeils v (Fig. 2) sicherzustellen, wird der Wechselmodul 15 einerseits bis zum Anschlag an das Rahmenteil 6 vorgeschoben und andererseits in dieser Position mit Hilfe der ersten Verriegelungsmittel 14 verriegelt. Hierzu dienen einerseits an der Vorderseite des Wechselmoduls 15 nach vom abstehende Verriegelungsbolzen 26 (Fig. 3), die so angeordnet und ausgebildet sind, daß sie bei der beschriebenen Einführung des Wechselmoduls 15 in den Freiraum 2 automatisch so tief in die Positionierungslöcher 12 (Fig. 2) eintreten, bis sie diese mit einem kurzen, eine Umfangsnut aufweisenden Abschnitt nach vom überragen. Andererseits weisen die Verriegelungsmittel 14 dicht oberhalb der Positionierungslöcher 12 jeweils ein gabelförmiges Verriegelungselement 27 auf, das an dem Rahmenteil 6 des Grundgestells 1 verschiebbar gelagert ist und z. B. nach Art einer Spannklaue auf den betreffenden Verriegelungsbolzen 26 aufgeschoben werden und in dessen Umfangsnut eintreten kann. Dadurch ist der Wechselmodul 15 in allen drei Raumrichtungen relativ zum Grundgestell 1 positioniert und fixiert (Fig, 4 und 5). Damit beim Einführen der Verriegelungsbolzen 26 in die Positionierungslöcher 12 keine Verkantungen auftreten, sind die vorderen Endabschnitte der Führungsnuten 11 und die Achsen der Positionierungslöcher 12 vorzugsweise exakt parallel zueinander und horizontal angeordnet.

Ein besonderer Vorteil der beschriebenen Maßnahmen besteht darin, daß die Bearbeitungsvorrichtung mit beliebig vielen, gleich ausgebildeten Wechselmodulen 15 betrieben werden kann, die ohne Hilfsmittel an die Bearbeitungsvorrichtung herangefahren werden und nach dem Einführen in den Freiraum 2 und nach dem Verriegeln der Verriegelungsmittel 14 automatisch eine vorgewählte Position relativ zum Grundgestell 1 einnehmen.

Erfindungsgemäß sind das Grundgestell 1 und der Wechselmodul 15 außerdem mit zwei zweiten Führungen 28a, 28b versehen, die zweckmäßig parallel zur Grundplatte 7 und zum Bodenteil 20 und damit beim Betrieb im wesentlichen horizontal angeordnet sind. Die Führungen 28a, 28b sind parallel zueinander und an gegenüberliegenden Innenseiten der seitlichen Rahmenteile 3, 4 (Führung 28a) bzw. 21 (Führung 28b) oder alternativ auf der Grundplatte 7 bzw. dem Bodenteil 20 befestigt. Weiterhin bestehen die zweiten Führungen 28a, 28b beispielsweise aus Schienen mit U-förmigen Führungsnuten 29a und 29b die nach innen hin offen sind. Schließlich sind die zweiten Führungen 28a, 28b so angebracht, daß sie nach der Einführung des Wechselmoduls 15 in den Freiraum 2 exakt fluchten und unmittelbar aneinauder grenzen.

Die zweiten Führungen 28a, 28b dienen zur Aufnahme von nicht näher dargestellten, zweiten Führungselementen, die seitlich an einem Schiebetisch 30 vorgesehen sind und vorzugsweise aus drehbar am Schiebetisch 30 gelagerten, in die Führungsnuten 29a, 29b passenden Rollen bestehen. Dabei ist der Schiebetisch 30 gemäß Fig. 3 als Bestandteil des Wechselmoduls 15 ausgebildet und an diesem mit Hilfe von zweiten Verriegelungsmitteln 31 verriegelbar. Dadurch ist der Schiebetisch 30 in der Verriegelungsstellung in allen drei Raumrichtungen relativ zum Wechselmodul 15 ausgerichtet und fixiert, so daß er nach dem Einfahren des Wechseknoduls 15 in das Grundgestell 1 auch relativ zu diesem genau positioniert ist.

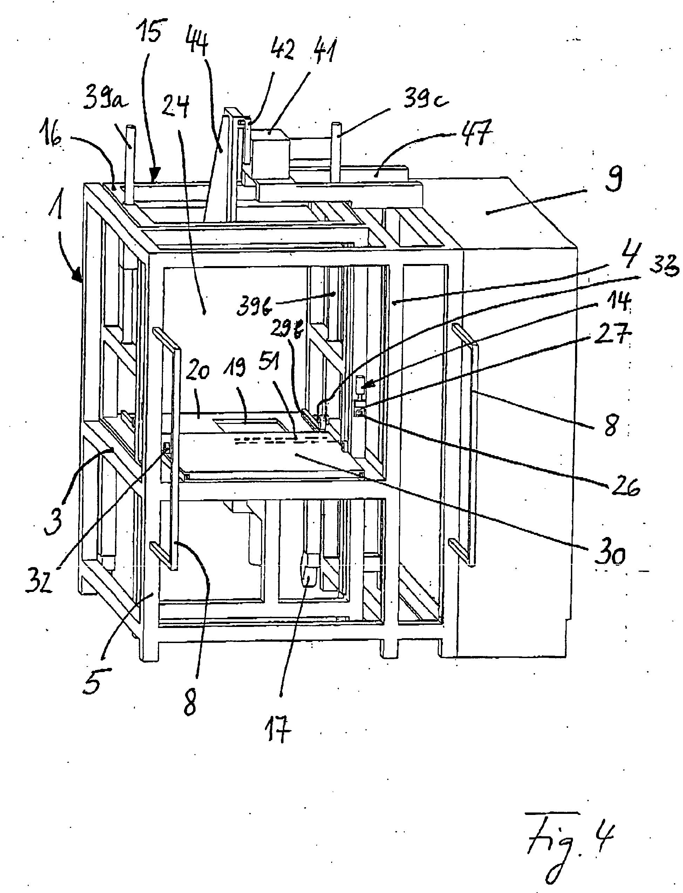

Als zweite Verriegelungsmittel 31 dienen beispielsweise am Schiebetisch 30 angebrachte Laschen 32, die Positionierungslöcher aufweisen (Fig. 3 und 4), und an den Rahmenteilen 21, 22 oder den zweiten Führungen 28b des Wechselmoduls 15 angebrachte, in die Positionierungslöcher 32 einführbare Verriegelungsbolzen 33 (Fig. 3 und 4).

Wegen der gegenseitigen Ausrichtung der zweiten Führungen 28a, 28b ist es weiterhin möglich, den Schiebetisch 30 durch Herausnehmen der Verriegelungsbolzen 33 aus den Fositionierungslöchern zu entriegeln und dann nach vorn in das Grundgestell 1 bzw. die in diesem gelagerten Führungen 28a zu verschieben, wie z. B. Fig. 4 und 5 zeigen.

Der Schiebetisch 30 dient zur Montage wenigstens einer Aufnahme 34 (Fig. 3), die eine exakte Halterung von Werkstücken 35 beim Bearbeitungsvorgang bewirkt. Die Aufnahme 34 ist in Fig. 3 nur schematisch angedeutet, da ihre Form und Größe von der Art des Werkstücks 35 abhängt, das im Einzelfall zu bearbeiten ist.

Im Ausführungsbeispiel der Fig. 3 ist oberhalb des Schiebetischs 30 ein im wesentlichen parallel zu diesem angeordneter Träger 36 vorgesehen, an dem mindstens ein nicht näher dargestelltes Bearbeitungswerkzeug 37, z. B. eine Sonotrode, aufgehängt ist. Jedem Bearbeitungswerkzeug 37 ist vorzugsweise je eine Vorschubeinheit 38 in Form einer pneumatischen Zylinder/Kolben-Anordnung od. dgl. zugeordnet, in welchem Fall das Bearbeitungswerkzeug 37 mittels der Vorschubeinheit 38 relativ zum Träger 36 und damit auch relativ zum Werkstück 35 hin und her bewegt werden kann. Diese Bewegung erfolgt im Ausführungsbeispiel in vertikaler Richtung bzw. senkrecht zu der im Betrieb horizontalen Oberfläche des Schiebetischs 30. Im übrigen sind Bearbeitungswerkzeuge 37 für die eingangs beschriebenen Zwecke und deren Vorschubeinheiten 38 allgemein bekannt und nicht Gegenstand der vorliegenden Erfindung, so daß weitere Erläuterungen für den Fachmann nicht erforderlich sind.

Gemäß einem derzeit für am besten gehaltenen Ausführungsbeispiel der Erfindung ist der Träger 36 als eine zur Oberfläche des Schiebetischs 30 parallele Platte ausgebildet, deren Seitenränder fest an senkrecht zu dieser Platte angeordneten Säulen 39a, 39b befestigt sind. Beide Säulen 39a, 39b sind in einer Bearbeitungstellung mit ihren unteren Enden am Gestell 16 (z. B. an dem Bodenteil 20, Fig. 3) abgestützt und außerdem in nur schematisch angedeuteten Führungsbuchsen 40 vertikal verschiebbar im Gestell 16 gelagert. Dadurch ist es möglich, den Träger 36 und mit ihm das Werkzeug 37 relativ zum Werkstück 35 um eine Strecke von z. B. ca. 400 mm anzuheben. Die Säulen 39a, 39b sind an ihren unteren Enden vorzugsweise verstellbar ausgebildet, damit die Höhenlage des Trägers 36 in der Bearbeitungsstelluug bei Bedarf verändert werden kann.

Zur Bewegung des Trägers 36 ist vorzugsweise ein nachfolgend beschriebener, erster Antrieb 41 vorgesehen. Dieser ist gemäß Fig. 1 auf dem Grundgestell 1 der Bearbeitungsvorrichtung und oberhalb des Freiraums 2 montiert und z. B. als elektrischer Getriebemotor ausgebildet, dessen Abtriebswelle an einem Ende einer Schwinge 42 befestigt ist, deren anderes Ende ein drittes Führungselement 43, vorzugsweise in Form einer drehbaren Rolle trägt. Die Schwinge 42 kann durch Einschalten des Antriebs 41 um 360° in Richtung eines Pfeils w um die Achse der Abtriebswelle gedreht werden, die im wesentlichen senkrecht zur Einfahrrichtung des Wechselmoduls 15 (Pfeil v) und parallel zur Oberfläche des Schiebetischs 30 bzw. Trägers 36 angeordnet ist. Bei einer besonders bevorzugten Ausführungsform wird allerdings ein Reversiermotor verwendet, um die Schwinge 42 zunächst um 180° in der einen Richtung zu drehen (= Aufwärtshub) und dann in entgegengesetzter Richtung ebenfalls um 180° in die Ausgangsstellung zurückzubewegen (= Abwärtshub). Dadurch ergibt sich der Vorteil, daß die Führungsnut 46 nur etwa halb so lang ausgebildet werden muß.

Der Träger 36 ist mit einem im Ausführungsbeispiel vertikal nach oben ragenden Kupplungselement 44 (Fig. 3) fest verbunden, das an einem oberen Ende eine dritte Führung 45 aufweist, die vorzugsweise eine zur Kupplung mit dem Führungselement 43 (Fig. 1) bestimmte Führungsnut 45 enthält. Dabei ist die Anordnung so getroffen, daß das Führungselement 43 und die dritte Führung 45 ein Mittel zum automatischen Kuppeln bzw. Entkuppeln des Trägers 36 mit bzw. vom Antrieb 41 bilden. Zu diesem Zweck ist die Führungsnut 46 einerseits parallel zur Richtung v (Fig. 2) angeordnet, in welcher der Wechselmodul 15 beim Einfahren in den Freiraum 2 bewegt wird. Andereseits ist die Führungsnut 46 nach dem Einlaufen der ersten Führungselemente 25 des Wechselmoduls 15 in die erste Führung 10 des Grundgestells 1 so angeordnet und zum Führungselement 43 der Schwinge 42 hin geöffnet, daß dieses beim weiteren Verschieben des Wechselmoduls 15 in Richtung des Freiraums 2 automatisch in die Führungsnut 46 eintritt. Voraussetzung hierfür ist lediglich, daß sich das Führungselement 43 in seiner tiefsten, aus Fig. 1 ersichtlichen Stellung befindet, in der die Schwinge 42 vertikal nach unten weist. Befindet sich der Wechselmodul 15 schließlich voll in seiner durch die ersten Verriegelungsmittel 14 fixierten Lage innerhalb des Grundgestells 1, dann ist das Führungselement 43 in einem Endabschnitt der Führungsnut 46 angeordnet mit der Folge, daß das Kupplungselement 44 und mit ihm der gesamte Träger 36 durch Einschalten des ersten Antriebs 41 vertikal auf und ab bewegt werden kann. Der Antrieb 41 bildet dabei einen Sinustrieb. Dadurch ergibt sich der Vorteil, daß sich das Führungselement 43 nach einer halben Umdrehung der Abtriebswelle des Antriebs 41 und der Schwinge 42 in seiner höchsten Stellung bzw. im oberen Totpunkt befindet. Wird daher der Antrieb 41 nach einer halben Umdrehung der Abtriebswelle ausgeschaltet, wird die höchste Stellung des Trägers 36 automatisch durch Selbsthemmung gehalten, ohne daß zusätzliche Verriegelungen erforderlich sind. Im übrigen ist klar, daß der Träger 36 nach einer weiteren halben Umdrehung der Schwinge 42 in der entgegengesetzten Drehrichtung wieder in seine Ausgangsstellung nach Fig. 3 zurückkehrt.

Die beschriebene Bearbeitungsvorrichtung ist weiterhin mit einer Ausfahrsicherung versehen. Mit dieser wird verhindert, daß der im Freiraum 2 befindliche Wechselmodul 15 aus dem Grundgestell 1 herausgefahren werden kann, solange sich der Träger 36 in seiner Höchststellung nach Fig. 4 und 5 befindet. Dies hätte die unerwünschte Folge, daß das Kupplungselement 44 vom Antrieb 41 bzw. vom Führungselement 43 entkuppelt und dann der Träger 36 einschließlich aller daran befestigten Bearbeitungswerkzeuge 37, Vorschubeinheiten 38 usw. ungebremst bis in die durch Anschlag der Säulen 39a, 39b auf das Bodenteil 20 festgelegte Tiefststellung herabfallen würde, was zu Beschädigungen der genannten Teile führen könnte.

Erfindungsgemäß wird als Ausfahrsicherung einerseits eine der Säulen, hier die Säule 39b benutzt. Dieser wird eine solche Länge gegeben, daß ihr oberes Ende 39c (Fig. 3) in der Tiefststellung des Trägers 36 mit dem oberen Teil des Gestells 16 im wesentlichen bündig abschließt, in der Höchststellung des Trägers 36 (z. B. Fig. 4) dagegen um ein dem Hub des Trägers 36 entsprechendes Stück nach oben aus dem Gestell 16 herausragt. Andererseits wird in diesem Bereich der Gestelloberseite ein Anschlag 47 starr befestigt, der z. B. ein Bestandteil der zur Montage des Antriebs 41 vorgesehenen Befestigungseinheit ist. Dieser Anschlag 47 ist mit wenig Spiel so positioniert, daß er unmittelbar hinter dem ausgefahrenen Ende 39c der Säule 39b liegt und dadurch ein Herausfahren des Wechselmoduls 15 in Richtung eines Pfeils x (Fig. 5) sicher verhindert, solange das Ende 39c über das Gestell 16 nach oben ragt.

Schließlich sieht die Erfindung vor, auch den Schiebetisch 30 automatisch zu bewegen. Hierzu dient ein zweiter Antrieb 48 (Fig. 2), der im wesentlichen wie der erste Antrieb 41 ausgebildet ist. Dazu ist auf der Abtriebswelle eines elektrischen Getriebemotors eine Schwinge 49 mit einem vierten, vorzugsweise als drehbare Rolle ausgebildeten Führungselement 50 befestigt. Der Antrieb 48 ist entsprechend Fig. 2 im Grundgestell 1 so montiert, daß die Schwinge 49 im wesentlichen parallel zur Oberfläche der Grundplatte 7 angeordnet ist, während das Führungselement 50 nach oben ragt und einerseits dicht unterhalb der Grundplatte 7 angeordnet ist, andererseits in den Freiraum 2 ragt, wobei die Schwinge 49 in einer Grundstellung außerdem einen kleinen Winkel mit der Einfahrrichtung v des Wechselmoduls 15 bildet. Außerdem sind der Antrieb 48 und die Schwinge 49 so angeordnet, daß sie nach dem Einfahren des Wechselmoduls 15 in das Grundgestell 1 (Fig. 4 und 5) in der Aussparung 19 des Bodenteils 20 oder eines entsprechenden Rahmenteils zu liegen kommen, so daß ihre Funktion nicht durch den Wechselmodul 15 behindert wird.

An der Unterseite des Schiebetischs 30 ist eine nicht näher dargestellte, in Fig. 4 durch eine gestrichelte Linie schematisch angedeutete, vierte Führung 41 vorgesehen, die wie die anderen beschriebenen Führungen z. B. eine Führungsnut enthält, die hier nach unten hin geöffnet ist. Die Führung 51 erstreckt sich quer zur Richtung des Pfeils v und nur über einen Teil der Breite des Schiebetischs 30. Sie ist außerdem auch zu dem weiter entfernt liegenden Rahmenteil 21 des Wechselmoduls 15, d. h. zur Seite hin offen. Dabei ist die Anordnung so gewählt, daß das Führungselement 50 nach dem völligen Einfahren des Wechselmoduls 15 in den Freiraum 2 unmittelbar neben dem offenen Ende der Führungsnut liegt und daher durch Einschalten des Antriebs 48 und Drehen der Schwinge 49 (Fig. 2) um wenige Grad in eine zur Richtung des Pfeils v parallele Stellung in die Führungsnut 51 eingeführt und dadurch mit dem Schiebetisch 30 gekuppelt werden kann. Ein weiteres Drehen der Schwinge 49 um 180° in Richtung eines Pfeils z nach dem Lösen der Verriegelungsmittel 31 hat dann zur Folge, daß der Schiebetisch 30 aus den zweiten, am Wechsehnodul 15 befestigten Führungen 28b (Fig. 3) allmählich in die entsprechenden, am Grundgestell 1 befestigten Führungen 28a geschoben wird, bis die Schwinge 49 ihren entsprechenden Totpunkt erreicht hat. In dieser Stellung der Schwinge 49 ist der Schiebetisch 30 im wesentlichen oberhalb der Grundplatte 7 angeordnet (Fig. 4). Auch der zweite Antrieb 48 bildet somit insgesamt einen hier bevorzugten Sinustrieb. Wie beim Antrieb 21 ist es zweckmäßig, die Schwinge 49 in einer zum Pfeil z entgegengesetzten Richtung zurückzudrehen, wenn der Schiebetisch 30 wieder in den Wechselmodul 15 zurück bewegt werden soll, um ein vorzeitiges Entkuppeln des Führungselements 50 zu vermeiden und mit einer kurzen Führung 51 auszukommen.

### Die beschriebene Bearbeitungsvorrichtung arbeitet im wesentlichen wie folgt:

Ist ein Werkstück- und demgemäß auch ein Werkzeugwechsel erwünscht, wird der Schiebetisch 30 mittels des Antriebs 48 in den gerade in der Bearbeitungsvorrichtung vorhandenen Wechselmodul 15 zurückbewegt und dort mit den Verriegelungsmitteln 31 festgelegt. Durch Weiterdrehen der Schwinge 49 um wenige Grad wird der Antrieb 48 außerdem vom Schiebetisch 30 entkuppelt. Weiterhin wird die Schwinge 42 in ihren aus Fig. 1 ersichtlichen unteren Totpunkt gedreht, wodurch der Wechselmodul 15 für ein Herausfahren aus der Bearbeitungsvomchtung vorbereitet ist.

Nach dem jetzt erfolgenden Entriegeln der Verriegelungsmittel 14 wird der Wechselmodul 15 in Richtung des Pfeils x (Fig. 5) aus dem Freiraum 2 herausgefahren und an einem zweckmäßigen Ort aufbewahrt, bis er wieder benötigt wird. Außerdem wird ein neuer Wechselmodul 15 in Richtung des Pfeils v in den Freiraum 2 eingefahren und dort mit den Verriegelungsmitteln 14 verriegelt. Dabei ist der Wechselmodul 15 einerseits mit einer auf dem Schiebetisch 30 montierten Aufnahme 34 versehen, die genau an die Form der nächsten zu bearbeitenden Werkstücke 35 angepaßt ist. Andererseits sind an dem Träger 36 alle diejenigen Werkzeuge 37, Vorschubeinheiten 38 usw. befestigt, die für die neu zu bearbeitenden Werkstücke 35 benötigt werden. Außerdem sind die Aufnahme 34 und die Werkzeuge 37 so relativ zueinander positioniert und ausgerichtet, wie es für die spätere Bearbeitung erforderlich ist.

Nach dem Einführen und Verriegeln des neuen Wechselmoduls 15 mittels der Verriegelungsmittel 31 wird der zweite Antrieb 48 aktiviert, um ihn in der beschriebenen Weise mit dem Schiebetisch 30 zu kuppeln. Danach werden die Verriegelungsmittel 31 entriegelt, worauf der Schiebetisch 30 durch erneutes Betätigen des Antriebs 48 in den vorderen Bereich des Grundgestells 1 geschoben wird. Dieser Bereich, der z. B. aus Fig. 4 ersichtlich ist, stellt die Einlege- und Entnahmestation der Bearbeitungsvorrichtung dar. Die Bedienungsperson kann somit von vom her ein zu bearbeitendes Werkstück 35 in die auf dem Schiebetisch 30 befindliche Aufnahme 34 einlegen und auf übliche Weise verspannen. Die Aufnahme 34 selbst, die erforderlichen Spannmittel und etwa weiterhin erforderliche, in die Aufnahme 34 integrierte Bearbeitungsmittel sind nicht dargestellt, da sie gegenüber üblichen bekannten Bearbeitungsvartichtungen nicht verändert werden brauchen.

Im nächsten Schritt wird der.Schiebetisch 30 mittels des Antriebs 48 zurück in den Wechselmodul 15 gefahren und dort mit den Verriegelungsmitteln 31 arretiert (Fig 3). In dieser Lage ist das neue Werkstück 35 automatisch so relativ zu dem wenigstens einem Bearbeitungswerkzeug 37 ausgerichtet, daß dieses bzw. die zugehörige Vorschubeinheit 38 ohne weitere Justier-, Einstell- und/oder Sicherungsmaßnahme sofort aktiviert werden kann, um das Werkzeug 37 in Richtung des Werkstücks 35 vorzuschieben. Der Freiraum 2 und der in ihm verriegelte Wechselmodul 15 einschließlich des Bearbeitungsraums 24 und des verriegelten Schiebetischs 30 definieren dabei die Bearbeitungsstation der Bearbeitungsvorrichtung.

Nach Beendigung der Bearbeitung werden die Werkzeuge 37 wieder angehoben, worauf die Verriegelungsmittel 31 entriegelt werden und der Schiebetisch 30 zurück in die Einlege- und Entnahmestation nach Fig. 4 gefahren wird, um ein neues Werkstück 35 in die Aufnahme 34 einzulegen.

Handelt es sich um Werkstücke 35, die vergleichsweise flach ausgebildet sind, können der Träger 36 bzw. die Werkzeuge 37 bzw. die Vorschubeinheiten 38 starr im Gestell 16 montiert sein. Ein erforderlicher Hub wird dann allein mit den Vorschubeinheiten 38 realisiert. Bei bauchigen oder stark gekrümmten Werkstücken 35, bei denen der Hub der Vorschubeinheit 38 nicht ausreicht, um das Werkstück 35 mit dem Schiebetisch 30 unter dem Bearbeitungswerkzeug 37 in Position zu bringen oder wieder zu entfernen, muss der Träger 36 dagegen zusammen mit dem Werkzeug 37 zusätzlich angehoben werden, bevor ein Werkstück 35 zugeführt oder entfernt wird. Für diesen Fall werden zumindest diejenigen Wechselmodule 15, die für solche Werkstücke 35 vorbereitet werden, zusätzlich mit dem Kupplungselement 44 versehen, falls nicht grundsätzlich alle vorhandenen Wechselmodule 15 dieses Kupplungselement 44 erhalten. Dieses Kupplungselement 44 wird dann entsprechend der obigen Beschreibung beim Einfahren eines solchen Wechselmoduls 15 in den Freiraum 2 automatisch mit dem ersten Antrieb 41 gekuppelt. Vor dem Verschieben des Schiebetischs 30 in die Einlege- und Entnahmestation kann der Träger 36 daher einschließlich der daran befestigten Werkzeuge 37 durch Betätigen des Antriebs 41 so weit angehoben werden, wie es nötig ist, vorzugsweise stets bis zum oberen Totpunkt, um eine Verriegelung durch Selbsthemmung zu bewirken. Ist dann das neue Werkstück 35 eingelegt und der Schiebetisch 30 in den Wechselmodul 15 zurückgekehrt und dort verriegelt worden, wird der Träger 36 wieder in die Tiefststellung der Schwinge 42 abgesenkt, worauf die Bearbeitung des Werkstücks 35 auf übliche Weise vorgenommen werden kann.

Durch die Erfindung werden zusätzlich zu den schon genannten Vorteilen zahlreiche weitere Vorteile erzielt. Vorteilhaft ist jedoch vor allem, daß der Werkstück- und Werkzeugwechsel ohne zusätzliche Hilfsmittel einfach dadurch vorgenommen werden kann, daß ein entsprechender Wechselmodul 15 in die Bearbeitungsvorrichtung eingefahren und in dieser mit den Verriegelungsmitteln 14 verriegelt wird. Der gesamte Wechselmodul 15 kann daher im Gegensatz zu bisher bis auf den Schiebetisch 30 einteilig ausgebildet sein. Dennoch sind vor allem die die Geometrie bestimmenden Elemente wie z. B. der Schiebetisch 30 und der Träger 36, die ein punktgenaues Auftreffen der Werkzeuge 37 auf die Werkstücke 35 gewährleisten, stets Bauteile des Wechselmoduls 15 und nicht wie bisher des übrigen Teils der Bearbeitungsvorrichtung. Außerdem braucht der erste Antrieb 41, falls er benötigt wird, nur den Träger 36 und die Werkzeuge 37, aber nicht auch den ganzen Wechselmodul 15 bzw. wesentliche Teile des Gestells 16 anheben. Daher ist eine vergleichsweise kleine, kompakte, kostengünstige Konstruktion der gesamten Bearbeitungsvorrichtung möglich.

Die Erfindung ist nicht auf das beschriebene Ausführungsbeispiel beschränkt, das auf vielfache Weise abgewandelt werden kann. Das gilt insbesondere für die nur beispielhaft beschriebenen Führungen, Verriegelungsmittel und Antriebe, die je nach Bedarf anders ausgebildet werden können. Die Verriegelungsmittel 14, 31 können dabei grundsätzlich manuell tätig werden. Mit besonderem Vorteil werden jedoch z. B. die Verriegelungselemente 27 und die Verriegelungsbolzen 32 elektrisch, elektromagnetisch oder mit Hilfe von pneumatischen Zylinder/Kolben-Anordnungen od. dgl. automatisch betätigt. Außerdem werden die elektrische und gegebenenfalls pneumatische Versorgung der verschiedene Antriebe und Verriegelungsmittel sowie die Steuerung dieser Teile vorzugsweise mit Hilfe von entsprechenden Schaltern oder einer geeigneten Folgesteuerung vom Schaltschrank 9 aus bewirkt, wobei an den Wechselmodulen 15 befindliche Elemente zweckmäßig mittels einfacher Steckverbindungen mit dem Schaltschrank 9 verbunden werden. Weiter ist klar, daß die Bearbeitungsvorrichtung wenigstens je einen entsprechend vorbereiteten Wechselmodul 15 für jede beabsichtigte Bearbeitungsaufgabe aufweisen kann. Die Zahl der einer Bearbeitungsvorrichtung zugeordneten Wechselmodule 15 ist dabei an sich beliebig wählbar. Weiter wäre es möglich, die Bearbeitungsvorrichtung abweichend von Fig. 1. bis 5 so aufzubauen, daß die Werkstücke 35 von unten her bearbeitet werden, in welchem Teil der Träger 36 unten anzuordnen wäre, während der Schiebetisch 30 oberhalb der Werkstücke 35 zu liegen käme. Die übrigen beschriebenen Bauteile wären in entsprechender Weise anzupassen. Schließlich versteht sich, daß die verschiedenen Merkmale auch in anderen als den beschriebenen und dargestellten Kombinationen angewendet werden können, wie in den beiliegenden Ansprüchen definiert.

## Patentansprüche

1. Vorrichtung zum Bearbeiten von Kunststoff enthaltenden Werkstücken (35) durch Schweißen, Stanzen, Schneiden und/oder Kleben, enthaltend: ein Grundgestell (1) mit einer Bearbeitungsstation mit einem Freiraum (2) zum Bearbeiten der Werkstücke (35) und wenigstens einen in den Freiraum (2) einsetzbaren und in diesem festlegbaren Wechselmodul (15), der an eine vorgewählte Bearbeitungsaufgabe angepasst, dazu mit wenigstens einer Werkstück-Aufnahme (34) und wenigstens einem Bearbeitungswerkzeug (37) versehen ist, **dadurch gekennzeichnet, dass** das Grundgestell (1) mit einer Einlege- und Entnahmestation zum Einlegen und Entnehmen der Werkstücke (15) versehen ist, und das Wechselmodul (15) so ausgebildet ist, dass die Aufnahme (34) nach seiner Einführung in den Freiraum (2) zwischen der Bearbeitungsstation und der Einlege- und Entnahmestation hin und her verschiebbar ist, wobei der Wechselmodul (15) ein auf Laufrädern (17) abgestütztes, die Aufnahme (34) und das Bearbeitungswerkzeug (37) gemeinsam aufnehmendes Gestell (16) aufweist und mit diesem in den Freiraum (2) einfahrbar bzw. aus diesem herausfahrbar ist, die relative Lage der Aufnahme (34) und des Bearbeitungswerkzeugs (37) in der Bearbeitungsstation durch ihre Befestigung im Gestell (16) des Wechselmoduls (15) festgelegt ist, die Einlege- und Entnahmestation und der Wechselmodul (15) Führungen (28a, 28b) aufweisen, die in einem verriegelten Zustand des Wechselmoduls (15) aufeinander ausgerichtet sind, und die Aufnahme (34) an einem Schiebetisch (30) mit mit den Führungen (28a, 28b) zusammen wirkenden Führungselementen vorgesehen ist, mittels derer der Schiebetisch (30) im eingefahrenem Zustand des Wechselmoduls (15) zwischen dem Wechselmodul (15) und der Einlege- und Entnahmestation hin und her schiebbar ist.

2. Vorrichtung nach Anspruch 1, **dadurch gekennzeichnet, dass** das Grundgestell (1) erste Verriegelungsmittel (14) zur Verriegelung des Wechselmoduls (15) im Freiraum (2) aufweist.

3. Vorrichtung nach Anspruch 1 oder 2, **dadurch gekennzeichnet, dass** der Freiraum (2) an einer Rückseite des Grundgestells (1) vorgesehen ist.

4. Vorrichtung nach Anspruch 2 oder 3, **dadurch gekennzeichnet, dass** das Grundgestell (1) mit neben dem Freiraum (2) angeordneten, zur richtigen Positionierung des Wechselmoduls (15) in der Bearbeitungsstation bestimmten Führungen (10) versehen ist, und der Wechselmodul (15) seitlich angebrachte, diesen Führungen (10) zugeordnete Führungselemente (25) aufweist.

5. Vorrichtung nach Anspruch 4, **dadurch gekennzeichnet, dass** die Führungen (10) aus mit Führungsnuten (11) versehenen Schienen und die Führungselemente (25) aus in die Führungsnuten (11) einführbaren, drehbaren Rollen bestehen.

6. Vorrichtung nach Anspruch 4 oder 5, **dadurch gekennzeichnet, dass** die Führungen (10) so ausgebildet sind, dass der Wechselmodul (15) beim Einfahren in das Grundgestell (1) geringfügig angehoben wird.

7. Vorrichtung nach einem der Ansprüche 1 bis 6, **dadurch gekennzeichnet, dass** zumindest der Wechselmodul (15) mit Verriegelungsmitteln (31) für den Schiebetisch (30) versehen ist.

8. Vorrichtung nach einem der Ansprüche 1 bis 7, **dadurch gekennzeichnet, dass** das Bearbeitungswerkzeug (37) starr am Wechselmodul (15) fixiert ist.

9. Vorrichtung nach einem der Ansprüche 1 bis 7, **dadurch gekennzeichnet, dass** das Bearbeitungswerkzeug (37) an einer starr mit dem Wechselmodul (15) verbundenen Vorschubeinheit (38) montiert ist.

10. Vorrichtung nach Anspruch 8 oder 9, **dadurch gekennzeichnet, dass** das Bearbeitungswerkzeug (37) oder die Vorschubeinheit (38) an einem verschiebbar im Wechselmodul (15) gelagerten Träger (36) befestigt ist.

11. Vorrichtung nach Anspruch 10, **dadurch gekennzeichnet, dass** der Träger (36) aus einer parallel zum Schiebetisch (30) angeordneten Platte besteht und senkrecht zur Plattenebene verschiebbar ist.

12. Vorrichtung nach Anspruch 11, **dadurch gekennzeichnet, dass** der Träger (36) an verschiebbar im Wechselmodul (15) gelagerten Säulen (39a, 39b) befestigt ist.

13. Vorrichtung nach einem der Ansprüche 10 bis 12, **dadurch gekennzeichnet, dass** der Träger (36) an einem Kupplungselement (44) befestigt ist, das mit einem am Grundgestell (1) montierten, ersten Antrieb (41) kuppelbar ist.

14. Vorrichtung nach Anspruch 13, **dadurch gekennzeichnet, dass** das Kupplungselement (44) und der Antrieb (41) mit Mitteln zum automatischen An- bzw. Abkuppeln des Kupplungselements (44) beim Ein- bzw. Ausfahren des Wechselmoduls (15) versehen sind.

15. Vorrichtung nach Anspruch 14, **dadurch gekennzeichnet, dass** am Träger (36) eine parallel zu einer Einfahr- bzw. Ausfahrrichtung (v, x) angeordnete Führung (45) und am ersten Antrieb (41) ein mit dieser zusammenwirkendes Führungselement (43) vorgesehen ist.

16. Vorrichtung nach Anspruch 15, **dadurch gekennzeichnet, dass** die Führung (45) eine Führungsnut (46) enthält und das Führungselement (43) eine in die dritte Führungsnut (46) einführbare Rolle ist.

17. Vorrichtung nach einem der Ansprüche 1 bis 16, **dadurch gekennzeichnet, dass** sie mit einer ein unbeabsichtigtes Herausfahren des Wechselmoduls (15) aus dem Grundgestell (1) verhindernden Ausfahrsicherung versehen ist.

18. Vorrichtung nach Anspruch 17, **dadurch gekennzeichnet, dass** die Ausfahrsicherung zumindest eine der beiden Säulen (39b) und einen mit dieser zusammenwirkenden, am Grundgestell (1) vorgesehenen Anschlag (47) enthält.

19. Vorrichtung nach einem der Ansprüche 1 bis 18, **gekennzeichnet durch** einen am Grundgestell (1) montierten und zur Verschiebung des Schiebetischs (30) bestimmten Antrieb (48), der im eingefahrenen Zustand des Wechselmoduls (15) antriebsmäßig mit dem Schiebetisch (30) kuppelbar ist.

20. Vorrichtung nach Anspruch 19, **dadurch gekennzeichnet, dass** der Schiebetisch (30) mit einer quer zu seiner Verschieberichtung angeordneten Führung (51) und der Antrieb (48) mit einem mit dieser Führung (51) zusammenwirkenden Führungselement (50) versehen ist.

21. Vorrichtung nach Anspruch 20, **dadurch gekennzeichnet, dass** die Führung (51) eine Führungsnut aufweist und das Führungselement (51) eine in diese Führungsnut einführbare Rolle ist.

22. Vorrichtung nach einem der Ansprüche 13 bis 21, **dadurch gekennzeichnet, dass** der Antrieb (51, 48) aus einem elektrischen Getriebemotor besteht.

23. Vorrichtung nach einem der Ansprüche 13 bis 22, **dadurch gekennzeichnet, dass** der Antrieb (41, 48) als Sinustrieb ausgebildet ist.

## Claims

1. An apparatus for machining workpieces (35) containing plastic material by welding, stamping, cutting and/or adhesive bonding, comprising: a basic frame (1) having a machining station with a free space (2) for machining the workpieces (35) and at least one interchangeable module (15) which can be inserted into the free space (2) and can be fixed therein and which is adapted to a selected machining task, provided for this purpose with at least one workpiece mount (34) and at least one machining tool (37)
**characterized in that**
the basic frame (1) is provided with a loading and unloading station for loading and unloading the workpieces (15) and the interchangeable module (15) is formed such that the mount (34), after its introduction into the free space (2), can be moved to and fro between the machining station and the loading and unloading station, with the interchangeable module (15) comprising a frame (16) supported on running wheels (17) and receiving the mount (34) and the machining tool (37) together and with it being able to be moved with it into and out of the free space (2), with the relative position of the mount (34) and of the machining tool (37) being determined in the machining station by their fastening in the frame (16) of the interchangeable module (15), with the loading and unloading station and the interchangeable module (15) comprising guides (28a, 28b) which are aligned with one another in a latched state of the interchangeable module (15), and with the mount (34) being provided on a slide table (30) having guide elements cooperating with the guides (28a, 28b), by means of which the slide table (30) can be moved to and fro between the interchangeable module (15) and the loading and unloading station in the inserted state of the interchangeable module (15).

2. An apparatus according to claim 1, **characterized in that** the basic frame (1) comprises first latching means (14) for latching the interchangeable module (15) in the free space (2).

3. An apparatus according to claim 1 or claim 2, **characterized in that** the free space (2) is provided at a rear side of the basic frame (1).

4. An apparatus according to claim 2 to claim 3, **characterized in that** the basic frame (1) is provided with guides (10) adjacent to the free space (2) for correct positioning of the interchangeable module (15) in the machining station; and **in that** the interchangeable module (15) comprises guide elements (25) attached at the side and associated with these guides (10).

5. An apparatus according to claim 4, **characterized in that** the guides (10) consist of rails provided with guide grooves (11) and the guide elements (25) consist of rotatable rollers which can be introduced into the guide grooves (11).

6. An apparatus according to claim 4 or 5, **characterized in that** the guides (10) are formed such that the interchangeable module (15) is raised slightly on moving into the basic frame (1).

7. An apparatus according to any one of the claims 1 to 6, **characterized in that** at least the interchangeable module (15) is provided with latching means (31) for the slide table (30).

8. An apparatus according to any one of the claims 1 to 7, **characterized in that** the machining tool (37) is fixed rigidly at the interchangeable module (15).

9. An apparatus according to any one of the claims 1 to 7, **characterized in that** the machining tool (37) is mounted on a feed unit (38) rigidly connected to the interchangeable module (15).

10. An apparatus according to claim 8 or claim 9, **characterized in that** the machining tool (37) or the feed unit (38) is fastened to a carrier (36) mounted displaceable in the interchangeable module (15).

11. Apparatus according to claim 10, **characterized in that** the carrier (36) consists of a plate arranged parallel to the slide table (30) and is movable perpendicular to the plate plane.

12. An apparatus according to claim 11, **characterized in that** the carrier (36) is fastened to columns (39a, 39b) mounted displaceably in the interchangeable module (15).

13. An apparatus according to any one of the claims 10 to 12, **characterized in that** the carrier (36) is fastened to a coupling element (44) which can be coupled to a first drive (41) mounted on the basic frame (1).

14. An apparatus according to claim 13, **characterized in that** the coupling element (44) and the drive (41) are provided with means for the automatic coupling and decoupling of the coupling element (44) on moving the interchangeable module (15) in and out respectively.

15. An apparatus according to claim 14, **characterized in that** a guide (45) arranged parallel to a direction of insertion and withdrawal (v, x) is provided at the carrier (36) and a guide element (43) is provided at the first drive unit (41) and cooperates therewith.

16. An apparatus according to claim 15, **characterized in that** the third guide (45) has a guide groove (46) and the third guide element (43) is a roller which can be introduced into the third guide groove (46).

17. An apparatus according to any one of the claims 1 to 16, **characterized in that** it is provided with a withdrawal safety device preventing inadvertent withdrawal of the interchangeable module (15) from the basic frame (1).

18. An apparatus according to claim 17, **characterized in that** the withdrawal safety device includes at least one of the two columns (39b) and an abutment (47) cooperating therewith provided on the basic frame (1).

19. An apparatus according to any one of the claims 1 to 18, **characterized by** a drive (48) mounted on the basic frame (1) and designed to move the slide table (30) which can be coupled to displace the slide table (30) drive-wise in the inserted state of the interchangeable module (15).

20. An apparatus according to claim 19, **characterized in that** the slide table (30) is provided with a guide (51) arranged transversely to its direction of displacement and the drive (48) is provided with a guide element (50) cooperating with this guide (51).

21. An apparatus according to claim 20, **characterized in that** the guide (51) has a guide groove and the guide element (51) is a roller which can be introduced into this groove.

22. An apparatus according to any one of the claims 13 to 21, **characterized in that** the drive (51, 48) consists of an electric geared motor.

23. An apparatus according to any one of the claims 13 to 22, **characterized in that** the drive (41, 48) is made as a sinusoidal drive.

## Revendications

1. Dispositif pour travailler des pièces à oeuvrer (35) contenant de la matière plastique par soudage, poinçonnage, découpe et/ou collage, comprenant : un châssis de base (1) avec un poste de travail doté d'un espace libre (2) pour travailler les pièces à oeuvrer (35) et au moins un module d'échange (15) susceptible d'être mis en place dans l'espace libre (2) et d'être immobilisé dans celui-ci, ledit module étant adapté à une tâche de travail présélectionnée et à cet effet pourvu d'au moins une réception de pièces (34) et d'au moins un outil de travail (37), **caractérisé en ce que** le châssis de base (1) est pourvu d'un poste de mise en place et d'enlèvement pour mettre en place et enlever les pièces à oeuvrer (15), et le module d'échange (15) est ainsi réalisé que la réception (34) peut être déplacée en va-et-vient après son introduction dans l'espace libre (2) entre le poste de travail et le poste de mise en place et d'enlèvement, dans lequel le module d'échange (15) comprend un châssis (16) soutenu sur des roues de déplacement (17) et recevant en commun la réception (34) et l'outil de travail (37) et est susceptible d'être introduit avec ce châssis dans l'espace libre (2) ou d'en être enlevé, la position relative de la réception (34) et de l'outil de travail (37) dans le poste de travail étant établie par leur fixation dans le châssis (16) du module d'échange (15), la station de mise en place et d'enlèvement et le module d'échange (15) comprenant des guidages (28a, 28b) qui, dans un état verrouillé du module d'échange (15), sont orientés l'un vers l'autre, et la réception (34) est prévue sur une table mobile (30) dotée d'éléments de guidage qui coopèrent avec les guidages (28a, 28b) au moyen desquels, dans l'état introduit du module d'échange (15), la table mobile (30) est déplaçable en va-et-vient entre le module d'échange (15) et le poste de mise en place et d'enlèvement.

2. Dispositif selon la revendication 1, **caractérisé en ce que** le châssis de base (1) comprend des premiers moyens de verrouillage (14) pour verrouiller le module d'échange (15) dans l'espace libre (2).

3. Dispositif selon la revendication 1 ou 2, **caractérisé en ce que** l'espace libre (2) est prévu sur un côté postérieur du châssis de base (1).

4. Dispositif selon la revendication 2 ou 3, **caractérisé en ce que** le châssis de base (1) est pourvu de guidages (10) agencés à côté de l'espace libre (2) et destinés au positionnement correct du module d'échange (15) dans le poste de travail, et le module d'échange (15) comprend des éléments de guidage (25) montés latéralement et associés à ces guidages (10).

5. Dispositif selon la revendication 4, **caractérisé en ce que** les guidages (10) sont constitués par des rails pourvus de rainures de guidage (11) et les éléments de guidage (25) sont constitués par des galets rotatifs susceptibles d'être introduits dans les rainures de guidage (11).

6. Dispositif selon la revendication 4 ou 5, **caractérisé en ce que** les guidages (10) sont réalisés de telle façon que le module d'échange (15) est légèrement soulevé lors de l'introduction dans le châssis de base (1).

7. Dispositif selon l'une des revendications 1 à 6, **caractérisé en ce qu'**au moins le module d'échange (15) est pourvu de moyens de verrouillage (31) pour la table mobile (30).

8. Dispositif selon l'une des revendications 1 à 7, **caractérisé en ce que** l'outil de travail (37) est fixé de manière rigide sur le module d'échange (15).

9. Dispositif selon l'une des revendications 1 à 7, **caractérisé en ce que** l'outil d'usinage (37) est monté sur une unité d'avance (38) reliée rigidement au module d'échange (15).

10. Dispositif selon la revendication 8 ou 9, **caractérisé en ce que** l'outil de travail (37) ou l'unité d'avance (38) est fixé(e) sur un support (36) monté déplaçable dans le module d'échange (15).

11. Dispositif selon la revendication 10, **caractérisé en ce que** le support (36) est constitué par une plaque agencée parallèlement à la table mobile (30) et est déplaçable perpendiculairement au plan de la plaque.

12. Dispositif selon la revendication 11, **caractérisé en ce que** le support (36) est fixé sur des colonnes (39a, 39b) montées mobiles dans le module d'échange (15).

13. Dispositif selon l'une des revendications 10 à 12, **caractérisé en ce que** le support (36) est fixé sur un élément d'accouplement (44) qui peut être accouplé avec un premier entraînement (41) monté sur le châssis de base (1).

14. Dispositif selon la revendication 13, **caractérisé en ce que** l'élément d'accouplement (44) et l'entraînement (41) sont dotés de moyens pour accoupler ou découpler automatiquement l'élément d'accouplement (44) lors de l'entrée ou de la sortie du module d'échange (15).

15. Dispositif selon la revendication 14, **caractérisé en ce qu'**il est prévu un guidage (45) agencé sur le support (36) parallèlement à une direction d'entrée ou de sortie (v, x), et un élément de guidage (43) agencé sur le premier entraînement (41) et coopérant avec celui-ci.

16. Dispositif selon la revendication 15, **caractérisé en ce que** le guidage (45) contient une rainure de guidage (46) et l'élément de guidage (43) est un galet susceptible d'être introduit dans la troisième rainure de guidage (46).

17. Dispositif selon l'une des revendications 1 à 16, **caractérisé en ce qu'**il est pourvu d'un blocage anti-échappement qui empêche l'échappement inopiné du module d'échange (15) hors du châssis de base (1).

18. Dispositif selon la revendication 17, **caractérisé en ce que** le blocage anti-échappement comprend au moins l'une des deux colonnes (39b) et une butée (47) coopérant avec celle-ci et prévue sur le châssis de base (1).

19. Dispositif selon l'une des revendications 1 à 18, **caractérisé par** un entraînement (48) monté sur le châssis de base (1) et destiné au déplacement de la table mobile (30), qui peut être accouplé en termes d'entraînement avec la table mobile (30), dans l'état introduit du module d'échange (15).

20. Dispositif selon la revendication 19, **caractérisé en ce que** la table mobile (30) est pourvue d'un guidage (51) agencé perpendiculairement à sa direction de déplacement, et l'entraînement (48) est pourvu d'un élément de guidage (50) coopérant avec ce guidage (51).

21. Dispositif selon la revendication 20, **caractérisé en ce que** le guidage (51) comprend une rainure de guidage, et l'élément de guidage (51) est un galet susceptible d'être introduit dans cette rainure de guidage.

22. Dispositif selon l'une des revendications 13 à 21, **caractérisé en ce que** l'entraînement (51, 48) est un groupe motoréducteur électrique.

23. Dispositif selon l'une des revendications 13 à 22, **caractérisé en ce que** l'entraînement (41, 48) est réalisé sous forme d'entraînement sinusoïdal.
